# EUROPEAN PATENT APPLICATION

(11) **EP 4 629 329 A1**
(43) Date of publication of application: **08.10.2025**
(21) Application number: 25160838.6
(22) Date of filing: 28.02.2025
(51) Int. Cl.: H01M 4/36, H01M 4/62, H01M 4/66, H01M 10/054

(54) **ALUMINUM BATTERY**

(30) Priority: 13.03.2024 TW 113109082
(71) Applicant: APh ePower Co., Ltd., Kaohsiung City 821 (TW)
(72) Inventor: WU, Jui-Hsuan, Kaohsiung City 821 (TW); TSAI, Shih Po Ta, Kaohsiung City 821 (TW); CHEN, Wei-Ting, Kaohsiung City 821 (TW); CHEN, Kuan-Ting, Kaohsiung City 821 (TW); WEN, Yan-Jun, Kaohsiung City 821 (TW); YEN, Chuan-Te, Kaohsiung City 821 (TW); HUNG, Yu-Sheng, Kaohsiung City 821 (TW); SHAO, Chih-Huan, Kaohsiung City 821 (TW); WEN, Hsin-Chieh, Kaohsiung City 821 (TW)
(74) Representative: Becker, Eberhard

(57) **Abstract**

Disclosed is an aluminum battery including a positive electrode, a negative electrode, a separator, and an electrolyte. The positive electrode includes a metal substrate and a coating layer. The coating layer is arranged on the metal substrate, and a material of the coating layer includes a conductive carbon material with less than or equal to five layers and a water-soluble conductive polymer. The separator is arranged between the positive electrode and the negative electrode. The electrolyte impregnates the separator, the positive electrode, and the negative electrode.

## Description

### BACKGROUND

### Technical Field

The invention relates to an aluminum battery.

### Description of Related Art

Based on a functional mechanism of a positive electrode of an aluminum battery to accommodate/interpenetrate living substances and a requirement for conductivity, a high-conductivity material (such as graphite) with a layered structure is often used. However, with increase of charge-discharge processes, the layered structure is prone to expansion due to its structural defects to cause collapse, leading to decrease in a lifespan.

### SUMMARY

The invention is directed to an aluminum battery, which is adapted to increase a lifespan and maintain better conductivity.

The invention provides an aluminum battery including a positive electrode, a negative electrode, a separator, and an electrolyte. The positive electrode includes a metal substrate and a coating layer. The coating layer is arranged on the metal substrate, and a material of the coating layer includes a conductive carbon material with less than or equal to five layers and a water-soluble conductive polymer. The separator is arranged between the positive electrode and the negative electrode. The electrolyte impregnates the separator, the positive electrode, and the negative electrode.

In an embodiment of the invention, a weight ratio of the conductive carbon material to the water-soluble conductive polymer is between 10:1 and 10:5.

In an embodiment of the invention, the conductive carbon material includes graphene, and the water-soluble conductive polymer includes a polymer mixture of poly (3,4-dioxyethylthiophene) and polystyrene sulfonic acid.

In an embodiment of the invention, a molar ratio of the poly (3,4-dioxyethylthiophene) to the polystyrene sulfonic acid is between 1:1.6 and 1:5.

In an embodiment of the invention, a weight ratio of the conductive carbon material in the coating layer is between 65wt% and 80wt%.

In an embodiment of the invention, a weight ratio of the water-soluble conductive polymer in the coating layer is between 8wt% and 13wt%.

In an embodiment of the invention, the coating layer further includes an additive, and the additive includes a neutralizer, a defoamer, a thickener, a solvent, an adhesive, or a combination thereof.

In an embodiment of the invention, a weight ratio of the additive in the coating layer is between 7wt% and 27wt%.

In an embodiment of the invention, the adhesive is a non-conductive polymer.

In an embodiment of the invention, a material of the metal substrate includes titanium, nickel, or a combination thereof.

Based on the above descriptions, the materials of the coating layer of the positive electrode of the invention include the conductive carbon material with less than or equal to five layers and the water-soluble conductive polymer, the combination of the above two materials increases structural stability of the positive electrode, and these materials have conductive capabilities, thereby increasing a lifespan of the aluminum battery and maintaining better conductivity.

To make the aforementioned features and advantages of the invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a result of lifespan testing on an embodiment and a comparative example.
FIG. 2 is a schematic diagram of a result of resistance testing on an embodiment and a comparative example.

### DESCRIPTION OF THE EMBODIMENTS

In order to make the contents of the invention easier to understand, the following embodiments are specifically cited as examples on which the invention may actually be implemented. For clarity's sake, many practical details are explained in the following description. However, it should be understood that these practical details should not be used to limit the invention. That is, in some embodiments of the invention, these practical details are not necessary.

In order to clearly illustrate the invention, the known aluminum battery design rules are omitted in this specification, and any person with ordinary knowledge in the relevant technical field may design according to actual needs without departing from the spirit and scope of the invention.

Unless otherwise defined, all terms (including technical and scientific terms) used herein have the same meaning as commonly understood by those with ordinary skills in the art to which this invention belongs.

Unless otherwise specified, the term "between" used in this specification to define a numerical range is intended to cover a range equal to and between the endpoint values. For example, a size range is between a first value and a second value, which means that the size range may cover the first value, the second value and any value between the first value and the second value.

In the embodiment, the aluminum battery includes a positive electrode, a negative electrode, a separator, and an electrolyte, where the separator is arranged between the positive electrode and the negative electrode, the electrolyte impregnates the separator, the positive electrode, and the negative electrode, and the positive electrode includes a metal substrate and a coating layer arranged thereon. Here, the positive electrode, the negative electrode, the separator and the electrolyte may be arranged with each other in a suitable manner known in the field of aluminum batteries, which is not limited by the invention.

In addition, a material of the coating layer includes a conductive carbon material with less than or equal to five layers and a water-soluble conductive polymer, the combination of the above two materials increases the structural stability of the positive electrode, and these materials have conductive capabilities, thereby increasing the lifespan of the aluminum battery and maintaining better conductivity. Furthermore, when the number of layers in the conductive carbon material is too large (for example, graphite with ten layers or more), the polymer material may not be intercalated between its layered structures without introduction of additional energy, and in the invention a suitable number of layers that allows the polymer material to enter more easily is selected (for example, three to five layers). In this way, a better intercalation effect may be achieved, and structural defects in the conductive carbon material may be effectively mended. Here, the layered structure may extend in a first direction, and the polymer material may extend in a second direction perpendicular to the first direction, so that the layered structure and the polymer material may generate a criss-cross stable structure, but the invention is not limited thereto.

On the other hand, during the manufacturing process, the water-soluble conductive polymer may adopt water as a dispersion system, that is, the water-soluble polymer may be dissolved in water without producing precipitation, and thus may have an environmental protection effect. For example, the positive electrode of the invention does not contain organic solvents after the coating layer of the positive electrode is dried, and may be regarded as an environmentally friendly electrode, but the invention is not limited thereto. In the aforementioned manufacturing process, a solid content of a slurry is less than or equal to 30wt% (a total weight of solids in the slurry divided by a total weight of the slurry), so that the slurry may have fluidity and may be reliably coated on the metal substrate. In an embodiment, the solid content of the slurry is, for example, 16wt% for better operability, but the invention is not limited thereto.

In some embodiments, a weight ratio of the conductive carbon material to the water-soluble conductive polymer is between 10:1 and 10:5 (for example, 10:1) and/or a molar ratio of the poly (3,4-dioxyethylthiophene) to the polystyrene sulfonic acid is between 1:1.6 and 1:5. In this way, the water-soluble conductive polymer may more reliably enter between the layers of the conductive carbon material to further improve the structural stability, but the invention is not limited thereto. Here, the water-soluble conductive polymer with a suitable molar ratio may be selected according to an interlayer spacing of the conductive carbon material.

In some embodiments, the conductive carbon material includes graphene with a higher specific surface area, conductivity and structural strength, which may avoid a problem of decreased performance of the aluminum battery due to high resistance. In order to mitigate structural defects such as poor stacking or irregularity generated in a graphene exfoliation sheet material, the water-soluble conductive polymer including a polymer mixture of poly (3,4-dioxyethylthiophene) and polystyrene sulfonic acid (PEDOT:PSS) is introduced to repair the aforementioned defects. In this way, through a synergistic effect of the two materials, a better lifespan performance may be achieved, but the invention is not limited thereto. The polymer mixture of the poly (3,4-dioxyethylthiophene) and the polystyrene sulfonic acid is, for example, a product WED-SM, from Dali Polymer Industry.

In some embodiments, a weight ratio of the conductive carbon material in the coating layer is between 65wt% and 80wt%, and a weight ratio of the water-soluble conductive polymer in the coating layer is between 8wt% and 13wt%, but the invention is not limited thereto.

In some embodiments, the coating layer further includes an additive, where the additive includes a neutralizer, a defoamer, a thickener, a solvent, and an adhesive or a combination thereof, and a weight ratio of the additive in the coating is between 7wt% and 27wt%, but the invention is not limited thereto.

In some embodiments, the adhesive is a non-conductive polymer, such as sodium carboxymethyl cellulose (CMC)/styrene-butadiene rubber (SBR), the neutralizer may be triethanolamine or AMP-95 whose main active ingredient is aminomethyl propanol, the solvent is water, ethylene glycol (EG), or a combination thereof, and the thickener is an aqueous thickener, such as VIS4 whose main active ingredient is an oil dispersion of a renewable polymer.

In some embodiments, a material of the metal substrate includes titanium, nickel, or a combination thereof, but the invention is not limited thereto.

In some embodiments, a thickness of the metal substrate is between 30 µm and 100 µm, and a thickness of the coating layer is between 50 µm and 70 µm, but the invention is not limited thereto.

In some embodiments, the electrolyte includes aluminum halide, ionic liquid, or a combination thereof, where the aluminum halide includes aluminum chloride (AlCl₃), and the ionic liquid includes 1-ethyl-3-methylimidazolium chloride, but the invention is not limited thereto.

In some embodiments, a material of the negative electrode includes aluminum foil, and a material of the separator includes glass fiber or the like, where a thickness of the negative electrode is between 30 µm and 100 µm, and a thickness of the separator is between 30 µm and 350 µm, but the invention is not limited thereto.

In the following description, with reference of embodiments and comparative examples, effects that may be achieved by the aluminum battery of the invention are described in detail. Although the following embodiments are described, material details and processes used may be appropriately changed without exceeding the scope of the invention, and the invention should not be construed in a restrictive manner by the embodiments described below.

### < Comparative example 1>

An aluminum foil is used to perform cutting to obtain a negative electrode (with a thickness of 0.05 mm, a dimension of Φ14 mm). A coating layer (materials thereof are graphite, conductive carbon black and adhesive (carboxymethyl cellulose (CMC)/styrene-butadiene rubber (SBR) at a ratio of 1:4), and a weight ratio of each ingredient is 90:2:8) is formed on a nickel foil (with a thickness of thickness 0.03mm, a dimension of Φ15mm) to produce a positive electrode. Then, the negative electrode, the separator and the positive electrode are arranged in the above order and placed in a battery that is rich in electrolyte (aluminum chloride/1-ethyl-3-methylimidazolium chloride, with a mol ratio of 1.8:1) to obtain an aluminum battery of the comparative example 1.

### <Embodiment 1>

An aluminum battery of the embodiment 1 is similar to the aluminum battery of the comparative example 1, and a difference there between is that a material living substance of the coating layer of the positive electrode is a conductive carbon material (graphene, a weight ratio thereof in the coating layer is 80 wt%, and a number of layers is less than three layers), a water-soluble conductive polymer (a polymer mixture of poly (3,4-dioxyethylthiophene) and polystyrene sulfonic acid (with a moor ratio of 1:1.6), a weight ratio thereof in the coating layer is 8 wt%, Daligao Molecular industry commodity WED-SM), a weight ratio of the conductive carbon material to the water-soluble conductive polymer is 10:1, and additives (a weight ratio in the coating layer is 12 wt%), where the additives are composed of a neutralizer (Triethanolamine, Youhe Trading Co., Ltd.), a defoamer (150N, a main active ingredient is polyacrylate, Anfeng Industrial Co., Ltd.), a thickener, a solvent (ethylene glycol and water), and an adhesive (carboxymethyl cellulose (CMC)/styrene-butadiene rubber (SBR) at a ratio of 1:4), and a weight ratio of the living substance to the additives is 90:1. Here, a method for producing the coating layer is to use the aforementioned ingredients and adopt the neutralizer and the water-soluble conductive polymer (characteristics thereof are shown in Table 1) to reach a desired pH value (such as between 7 and 8), and then the solvent is added (a weight ratio of the solvent to the water-soluble conductive polymer may be 10 wt%), and the defoamer is added at an amount of 0.1 wt% compared to the total solution and then filtered (a filter pore size thereof may be 1 µm). Then, the thickener is added at an amount of 1.5 wt% compared to the total solution and stirred (a rotation speed is greater than 600 rpm) to thicken to 200 mesh (without penetrating the screen), which is a first slurry (characteristics thereof are shown in Table 2). On the other hand, the conductive carbon material was used as a second slurry at a weight ratio of 16 wt% (characteristics thereof are shown in Table 3). Then, the first slurry and the second slurry are mixed at a stirring speed of 600 rpm for 30 minutes to form a raw material (characteristics thereof are shown in Table 4), and then the raw material is mixed with the adhesive to form the desired coating layer.

**Table 1**

| Color | Dark blue |
|---|---|
| Solid content (wt%) | 1.21 |
| Viscosity (cP) | 19.2 |
| Conductivity (S/cm) | 511 |
| Particle size (nm) | 15.21 |

**Table 2**

| Color | Dark blue |
|---|---|
| Solid content (wt%) | 0.88 |
| Viscosity (cP) | 600 |
| Impedance (ohm) | 6.6 |

**Table 3**

| Color | Gray black |
|---|---|
| Solid content (wt%) | 17.0 |
| Viscosity (cP) | 5200 |

**Table 4**

| Color | Black |
|---|---|
| Solid content (wt%) | 16.9 |
| Viscosity (cP) | 5200 |
| Impedance (ohm) | 0.7 |

### < Comparative example 2>

A coating layer (materials thereof are graphite, conductive carbon black, and adhesive (carboxymethyl cellulose (CMC)/styrene-butadiene rubber (SBR) at a ratio of 1:4), and a weight ratio of each ingredient is 90:2:8) is formed on polyethylene terephthalate (PET) to obtain a polyethylene terephthalate coating film of the comparative example 2.

### <Embodiment 2>

A coating layer is formed on polyethylene terephthalate (the active materials consist of a conductive carbon material (graphene, a weight ratio thereof in the coating layer is 80 wt%), a water-soluble conductive polymer (a polymer mixture of poly (3,4-dioxyethylthiophene) and polystyrene sulfonic acid (with a moor ratio of 1:1.6), and a weight ratio thereof in the coating layer is 8 wt%), and additives (12 wt% in the coating layer), such as a combination of a neutralizer (triethanolamine), a thickener (VIS4), a solvent (ethylene glycol and water), and an adhesive (carboxymethyl cellulose (CMC)/styrene-butadiene rubber (SBR) at a ratio of 1:4), and a weight ratio of the living substance to the additives is 90:1, so as to obtain the polyethylene terephthalate coating film of the comparative example 2.

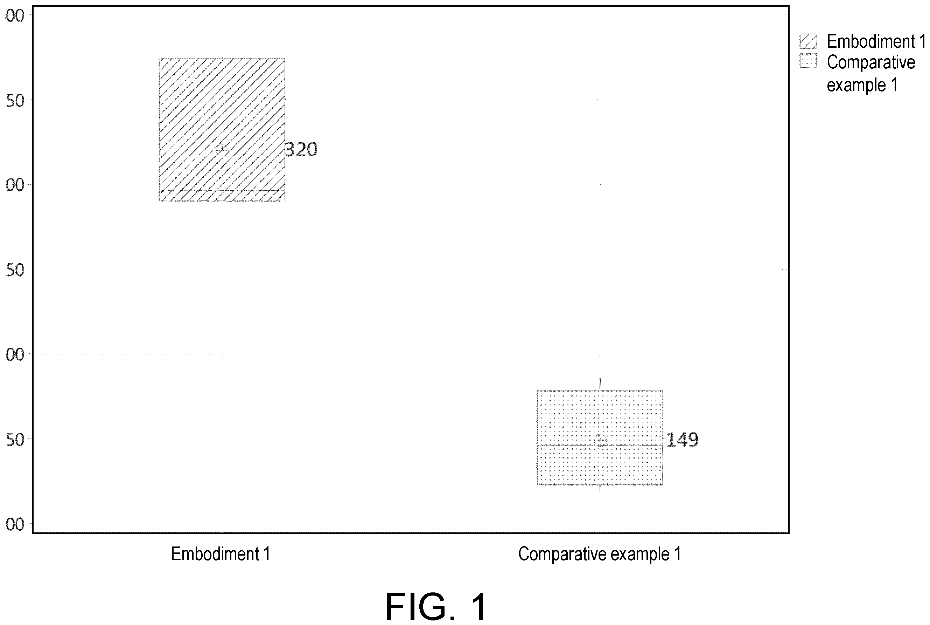

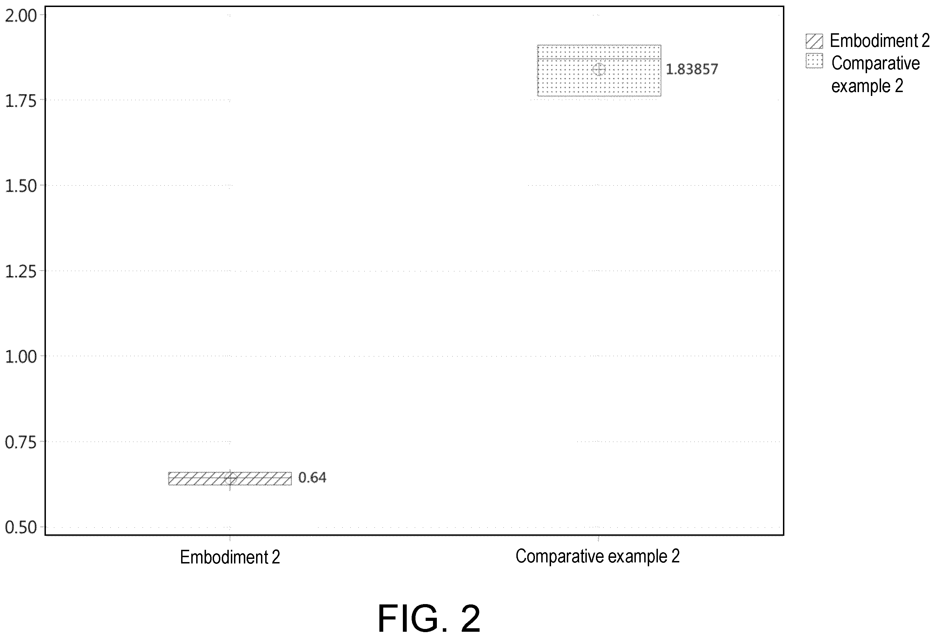

FIG. 1 is a schematic diagram of a result of lifespan testing on the embodiment 1 and the comparative example 1. FIG. 2 is a schematic diagram of a result of resistance testing on the embodiment 2 and the comparative example 2. In FIG. 1, charge-discharge testing is performed on an aluminum battery by using a micro-current charge-discharge machine (TPT-B1HCL050B) from Shinco Power Technology Co., Ltd., and the maximum lifespan (a number of charge-discharge cycles) is measured at a 3C charge-discharge rate. FIG. 2 illustrates resistance of the polyethylene terephthalate coating film measured by an LCR meter (HIOKI LCR3536) from HIOKI E.E. Corporation. It should be noted that the structure depicted in FIG. 2 is solely for resistance testing and does not represent the positive electrode structure of the invention.

The test results are shown in FIG. 1 and FIG. 2, and conclusions are as follows. From the result of FIG. 1, it may be seen that since the composite material in the embodiment 1 has a higher structural strength than graphite, the composite material may effectively improve operational stability and reduce material collapse. Therefore, the aluminum battery in the embodiment 1 has a longer cycle lifespan than the aluminum battery of the comparative example 1. According to FIG. 2, it may be seen that the embodiment 2 has a lower resistance, and the composite material has high conductivity in the conductive carbon material (graphene) and modification of defects by the water-soluble conductive polymer, which effectively improves conductivity and reduces resistance.

In summary, the materials of the coating layer of the positive electrode of the invention include at least the conductive carbon material with less than or equal to five layers and the water-soluble conductive polymer, the combination of the above two materials increases structural stability of the positive electrode, and these materials have conductive capabilities, thereby increasing a lifespan of the aluminum battery and maintaining better conductivity. On the other hand, in the manufacturing process, the water-soluble conductive polymer may use water as a dispersion system (no organic solvents are used), and therefore may achieve an environmentally friendly effect.

## Claims

1. An aluminum battery, comprising:
a positive electrode, comprising a metal substrate and a coating layer, wherein the coating layer is arranged on the metal substrate, and a material of the coating layer comprises a conductive carbon material with less than or equal to five layers and a water-soluble conductive polymer;
a negative electrode;
a separator, arranged between the positive electrode and the negative electrode; and
an electrolyte, impregnating the separator, the positive electrode, and the negative electrode.

2. The aluminum battery as claimed in claim 1, wherein a weight ratio of the conductive carbon material to the water-soluble conductive polymer is between 10:1 and 10:5.

3. The aluminum battery as claimed in claim 1, wherein the conductive carbon material comprises graphene, and the water-soluble conductive polymer comprises a polymer mixture of poly (3,4-dioxyethylthiophene) and polystyrene sulfonic acid.

4. The aluminum battery as claimed in claim 3, wherein a molar ratio of the poly (3,4-dioxyethylthiophene) to the polystyrene sulfonic acid is between 1:1.6 and 1:5.

5. The aluminum battery as claimed in claim 1, wherein a weight ratio of the conductive carbon material in the coating layer is between 65wt% and 80wt%.

6. The aluminum battery as claimed in claim 1, wherein a weight ratio of the water-soluble conductive polymer in the coating layer is between 8wt% and 13wt%.

7. The aluminum battery as claimed in claim 1, wherein the coating layer further comprises an additive, and the additive comprises a neutralizer, a defoamer, a thickener, a solvent, an adhesive, or a combination thereof.

8. The aluminum battery as claimed in claim 7, wherein a weight ratio of the additive in the coating layer is between 7wt% and 27wt%.

9. The aluminum battery as claimed in claim 7, wherein the adhesive is a non-conductive polymer.

10. The aluminum battery as claimed in claim 1, wherein a material of the metal substrate comprises titanium, nickel, or a combination thereof.
